# EUROPÄISCHE PATENTSCHRIFT

(11) **EP 0 565 853 B1**
(45) Veröffentlichungstag und Bekanntmachung des Hinweises auf die Patenterteilung: **28.05.1997**
(21) Anmeldenummer: 93103656.0
(22) Anmeldetag: 08.03.1993
(51) Int. Cl.: G05D 23/19, F24D 19/10

(54) **Verfahren zur Regelung der Vorlauftemperatur einer Heizungsanlage und Regelgerät zur Durchführung des Verfahrens**
Method and device for in-temperature regulation of a heating system and control unit for carrying out the process
Procédé et dispositif de régulation de la température aller d'un système de chauffage et dispositif de commande par la mise en oeuvre du procédé

(30) Priorität: 15.04.1992 CH 1251/92
(43) Veröffentlichungstag der Anmeldung: 20.10.1993
(73) Patentinhaber: Landis & Gyr Technology Innovation AG, 6301 Zug (CH)
(72) Erfinder: Kocher, Peter, CH-6043 Adligenswil (CH); Reichlin, Armin, CH-6415 Arth (CH)
(74) Vertreter: Müller, Hans-Jürgen, Dipl.-Ing.

(56) Entgegenhaltungen:
- CH-A- 665 706
- CH-A- 667 321
- CH-A- 678 984
- DE-A- 3 332 887
- DE-A- 3 800 866
- DE-A- 3 919 136
- FR-A- 2 575 810
- GB-A- 2 162 972
- HLH ZEITSCHRIFT FUR HEIZUNG, LUFTUNG, KLIMATECHNIK, Bd. 42, Nr. 5, 1991, DUSSELDORF DE Seiten 315 - 318 BAUMGARTH 'Strategien zur energieoptimalen Heizungsregelung'

## Beschreibung

Die Erfindung bezieht sich auf ein Verfahren zur Regelung der Vorlauftemperatur einer Heizungsanlage sowie auf eine Vorrichtung zur Durchführung des Verfahrens gemäß den Oberbegriffen der Ansprüche 1 und 7.

Ein Regelgerät der im Oberbegriff des Anspruchs 7 genannten Art ist aus der CH-PS 665 706 bekannt. Bei diesem Regler wird der Sollwert der Heizungsvorlauftemperatur, der eine Funktion der Außentemperatur darstellt, mit dem Istwert der Heizungsvorlauftemperatur verglichen und mit dem Differenzsignal ein Mischer angesteuert. Das Regelgerät beinhaltet damit auch das Verfahren nach dem Oberbegriff des Anspruchs 1.

Es ist auch bekannt (DE-OS 39 19 136), das stetige Stellglied, das beispielsweise ein Mischventil sein kann, unterschiedlich anzusteuern, je nachdem, wie groß die Regelabweichung der Raumtemperatur ist.

"In GB-A-2 162 972 ist eine Regelung offenbart, bei der zur Regelabweichung noch ein differenzierter Wert dieser Größe addiert wird und bei der diesem Summensignal ein Offset-Wert addiert wird, während gleichzeitig das Summensignal anschließend integriert wird. Die sich so ergebenden beiden Signale werden schließlich multipliziert. Dadurch lassen sich Systemparameter, die sich zeitlich ändern und die zu Oszillationen bzw. zu Regelabweichungen am Streckenausgang führen, vorteilhaft ausregeln."

Bei Heizungsanlagen mit bekannten Heizungsreglern werden gleichwohl größere Regelabweichungen beobachtet, die teilweise im Zeitverhalten der Regelstrecke, teilweise im Auftreten von Störgrößen ihre Ursache haben. Dieses Phänomen ist als "Überschwingen" bekannt.

Der Erfindung liegt die Aufgabe zugrunde, ein Regelverfahren anzugeben, das das Zeitverhalten der Regelstrecke berücksichtigt und so eine bessere Regelgenauigkeit ergibt, und einen Heizungsregler zu schaffen, der nach diesem Regelverfahren arbeitet.

Die genannte Aufgabe wird erfindungsgemäß durch die Merkmale der Ansprüche 1 und 7 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
Fig. 1 ein Schema einer Heizungsanlage,
Fig. 2 ein Blockschaltbild eines Reglers und
Fig. 3 und 4 Blockschaltbilder von Varianten.

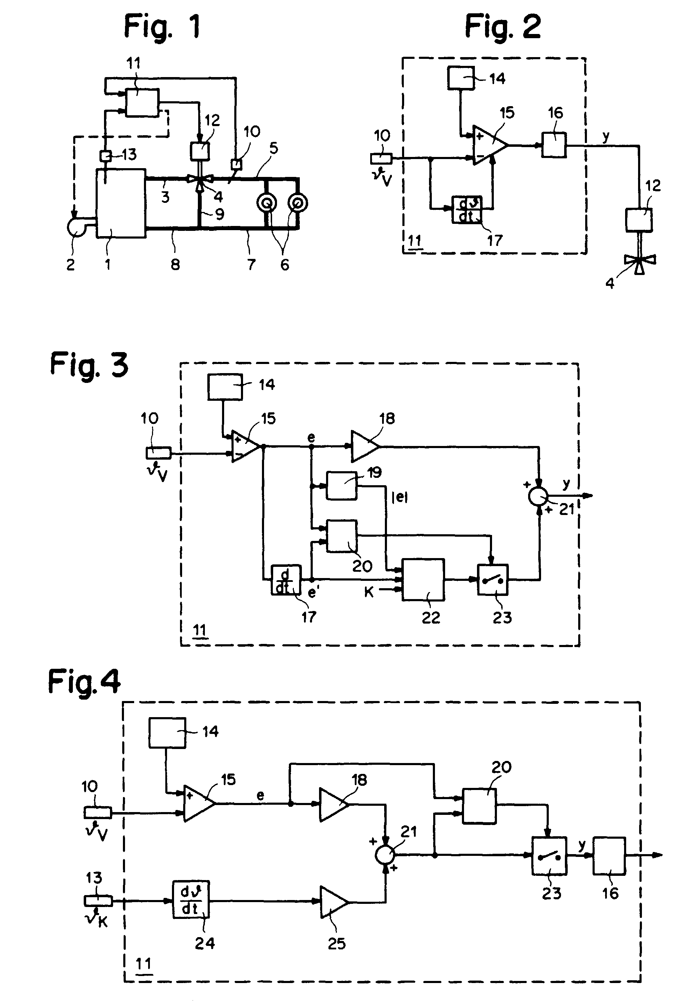

In der Fig. 1 bedeutet 1 einen Heizkessel, der von einem Brenner 2 beheizt wird. Eine Wärmeträgerflüssigkeit strömt unter der Wirkung mindestens einer nicht dargestellten Umwälzpumpe vom Heizkessel 1 durch eine Kesselvorlaufleitung 3 zu einem Mischventil 4 und von dort durch eine Heizungsvorlaufleitung 5 zu Wärmeverbrauchern 6, beispielsweise Radiatoren. Von den Wärmeverbrauchern 6 strömt die Wärmeträgerflüssigkeit durch eine Heizungsrücklaufleitung 7 und eine Kesselrücklaufleitung 8 zurück zum Heizkessel 1. Am Übergang von Heizungsrücklaufleitung 7 zur Kesselrücklaufleitung 8 zweigt eine Bypassleitung 9 ab, die zum Mischventil 4 führt. Je nach Stellung des Mischventils 4 strömt in die Heizungsvorlaufleitung 5 Wärmeträgerflüssigkeit allein aus der Heizungsvorlaufleitung 3 oder allein aus der Bypassleitung 9 ein oder aber eine Mischung aus beiden Quellen, deren Mischungsverhältnis wechseln kann.

Hinsichtlich der Ströme und der Stellung des Mischventils 4 sei hier die folgende terminologische Vereinbarung getroffen: Mischventil 4 gleich "offen" heißt, daß nur Wärmeträgerflüssigkeit von der Kesselvorlaufleitung 3 in die Heizungsvorlaufleitung 5 strömt, daß die Verbindung zur Bypassleitung 9 also geschlossen ist. Mischventil 4 gleich "geschlossen" heißt, daß die Verbindung zwischen Kesselvorlaufleitung 3 und Heizungsvorlaufleitung 5 geschlossen ist, so daß nur Wärmeträgerflüssigkeit von der Bypassleitung 9 in die Heizungsvorlaufleitung 5 strömt. Entsprechend sind die Begriffe "öffnen" und "schließen" zu interpretieren.

Alle jene Teile der Heizungsanlage, durch die die Wärmeträgerflüssigkeit strömen kann, also Heizkessel 1, Kesselvorlaufleitung 3, Mischventil 4, Heizungsvorlaufleitung 5, Wärmeverbraucher 6, Heizungsrücklaufleitung 7, Kesselrücklaufleitung 8 und Bypassleitung 9, werden nachfolgend als Wärmeträgerkreislauf bezeichnet.

Bei der in der Fig. 1 dargestellten Heizungsanlage ist als Mischventil 4 ein Dreiwegmischer eingebaut. Bei einem etwas modifizierten Aufbau einer Heizungsanlage wird ein Vierwegmischer verwendet, wobei dann Heizungsrücklaufleitung 7 und Kesselrücklaufleitung 8 direkt an den Virwegmischer angeschlossen werden und die Bypassleitung 9 entfällt.

Die Temperatur in der Heizungsvorlaufleitung 5, die Heizungsvorlauftemperatur T_{V}, wird mittels eines Vorlauftemperaturfühlers 10 gemessen, der an einen Heizungsregler 11 angeschlossen ist. Der Heizungsregler 11 wirkt auf einen Antrieb 12 des Mischventils 4 und gegebenenfalls auch auf den Brenner 2. Fallweise kann auch ein separater Kesselregler vorhanden sein. Ein Kesseltemperaturfühler 13, der auch in der Kesselvorlaufleitung 3 angeordnet sein kann, ist an den Heizungsregler 11 angeschlossen.

Der Heizungsregler 11 führt ein Verfahren zur Regelung der Heizungsvorlauftemperatur T_{V} einer Heizungsanlage aus, bei dem der Istwert der Heizungsvorlauftemperatur T_{V} mit dem Sollwert der Heizungsvorlauftemperatur T_{V} verglichen wird und die die Regelabweichung darstellende Differenz zwischen Sollwert und Istwert der Heizungsvorlauftemperatur T_{V} in ein Stellsignal für ein Mischventil 4 umgewandelt wird. Erfindungsgemäß wird bei der Erzeugung des Stellsignals für das Mischventil 4 die Änderungsgeschwindigkeit mindestens einer Temperaturgröße im Wärmeträgerkreislauf in der Form berücksichtigt wird, daß bei steigender Temperaturgröße eine Korrektur des Stellsignals in Schließrichtung und bei fallender Temperatur eine Korrektur in Öffnungsrichtung erfolgt und daß die absolute Größe der Änderungsgeschwindigkeit die absolute Größe der Korrektur bestimmt.

Die Temperaturgröße im Wärmeträgerkreislauf kann vorteilhaft die mittels des Vorlauftemperaturfühlers 10 gemessene Heizungsvorlauftemperatur T_{V} sein. Damit wird erreicht, daß die Stellung des Mischventils 4 nicht allein aufgrund der Differenz zwischen Soll- und Istwert der Heizungsvorlauftemperatur T_{V} verändert wird, sondern daß das zeitliche Verhalten der Heizungsvorlauftemperatur T_{V} mit berücksichtigt wird.

Um diese vorteilhafte Wirkung zu verdeutlichen, sei angenommen, zu einem gegebenen Zeitpunkt habe die erwähnte Regelabweichung, die allgemein mit dem Buchstaben e bezeichnet wird, einen bestimmten positiven Wert, weil der Istwert kleiner ist als der Sollwert. Daraus resultiert ein bestimmtes Stellsignal y, mit dem das Mischventil 4 angesteuert wird. Gleichzeitig habe die Heizungsvorlauftemperatur T_{V} eine bestimmte positive Änderungsgeschwindigkeit v. Das Stellsignal y wird nun nach Maßgabe dieser Änderungsgeschwindigkeit v korrigiert und zwar in Schließrichtung. Somit kann eine Korrektur des Stellsignals y erfolgen, bevor eine Änderung der Heizungsvorlauftemperatur T_{V} am Vorlauftemperaturfühler 10 wirksam wird und damit die Regelabweichung e verändert. In vorteilhafter Weise werden damit die sonst negativ wirkenden Zeitfaktoren ausgeglichen, nämlich die Totzeit infolge des räumlichen Abstands zwischen Mischventil 4 und Vorlauftemperaturfühler 10 in Verbindung mit der Strömungsgeschwindigkeit der Wärmeträgerflüssigkeit und die Einschwingzeit für die Erfassung der Heizungsvorlauftemperatur T_{V} mit dem Vorlauftemperaturfühler 10 infolge des Wärmeübergangs von der Wärmeträgerflüssigkeit auf den Vorlauftemperaturfühler 10. Damit wird ein Überschwingen der Heizungsvorlauftemperatur T_{V} verhindert. Anzumerken ist, daß sich das Zeitverhalten nicht etwa dadurch verbessern läßt, daß man den räumlichen Abstand zwischen Mischventil 4 und Vorlauftemperaturfühler 10 möglichst klein hält, denn ein gewisser Abstand ist notwendig, damit die mit dem Vorlauftemperaturfühler 10 erfaßte Temperatur korrekt ist, weil im Mischventil 4 Wärmeträgerflüssigkeit aus Kesselvorlaufleitung 3 und Bypassleitung 9 gemischt wird und eine bestimmte Rohrstrecke erforderlich ist, damit sich die beiden Teilströme gut durchmischen.

Ist die Regelabweichung e wie vorstehend positiv, jedoch die Änderungsgeschwindigkeit v negativ, so erfolgt eine Korrektur in Öffnungsrichtung.

Vorteilhaft ist es, als Temperaturgröße im Wärmeträgerkreislauf die Kesseltemperatur T_{K} zu benutzen. Dies entweder allein oder vorteilhaft in Kombination mit der zuvor beschriebenen Heizungsvorlauftemperatur T_{V}. Während die Heizungsvorlauftemperatur T_{V} die eigentliche Regelgröße ist, kann die Kesseltemperatur T_{K} als Störgröße betrachtet werden. Die Berücksichtigung der zeitlichen Änderung der Kesseltemperatur T_{K} bewirkt also eine Verbesserung des Regelverhaltens hinsichtlich dieser Störgröße.

Mit der Berücksichtigung der zeitlichen Änderung der Kesseltemperatur T_{K} wird erreicht, daß die Stellung des Mischventils 4 nicht allein aufgrund der Regelabweichung zwischen Ist- und Sollwert der Heizungsvorlauftemperatur T_{V} und gegebenfalls des zeitlichen Verhaltens der Heizungsvorlauftemperatur T_{V} verändert wird, sondern daß das zeitliche Verhalten der Kesseltemperatur T_{K} mit berücksichtigt wird.

Um auch diese vorteilhafte Wirkung zu verdeutlichen, sei wiederum angenommen, zu einem gegebenen Zeitpunkt habe die erwähnte Regelabweichung e einen bestimmten positiven Wert. Daraus resultiert ein bestimmtes Stellsignal y, mit dem das Mischventil 4 angesteuert wird. Gleichzeitig habe die Kesseltemperatur T_{K} eine bestimmte positive Änderungsgeschwindigkeit v. Das Stellsignal y wird nun nach Maßgabe dieser Änderungsgeschwindigkeit v korrigiert und zwar wiederum in Schließrichtung. Somit kann eine Korrektur des Stellsignals y erfolgen, bevor eine Änderung der Heizungsvorlauftemperatur T_{V} am Vorlauftemperaturfühler 10 wirksam wird und damit die Regelabweichung e verändert. In vorteilhafter Weise werden damit wiederum die sonst negativ wirkenden, zuvor schon genannten Zeitfaktoren ausgeglichen, außerdem aber auch jene Totzeit, die aus dem räumlichen Abstand zwischen Kesseltemperaturfühler 13 und Vorlauftemperaturfühler 10 resultiert. Auch durch diese Maßnahme wird also ein Überschwingen der Heizungsvorlauftemperatur T_{V} verhindert.

Ist die Regelabweichung e wie vorstehend positiv, jedoch die Änderungsgeschwindigkeit v negativ, so erfolgt analog eine Korrektur in Öffnungsrichtung.

Es ist weiterhin vorteilhaft, wenn die absolute Größe der Korrektur des Stellsignals y proportional zur absoluten Größe der Änderungsgeschwindigkeit von Kesseltemperatur T_{K} und/oder Heizungsvorlauftemperatur T_{V} ist. Damit wird erreicht, daß die Korrektur an das jeweilige Zeitverhalten angepaßt ist.

Vorteilhaft ist außerdem, wenn der Proportionalitätsfaktor der Relation zwischen Größe der Korrektur des Stellsignals y und Größe der Änderungsgeschwindigkeit v von Kesseltemperatur T_{K} und/oder Heizungsvorlauftemperatur T_{V} eine Funktion der Regelabweichung e ist. Damit werden Schwingungsvorgänge praktisch vollständig unterdrückt.

Zuvor war an Beispielen gezeigt worden, wie das Stellsignal y korrigiert wird, wenn der Istwert der Regelgröße unter dem Sollwert der Regelgröße liegt, wobei die Regeldifferenz also positiv ist, und wenn die Änderungsgeschwindigkeit v der Temperaturgröße entweder positiv oder negativ ist. In gleicher Weise wird die Verbesserung des Regelverhaltens erreicht, wenn der Istwert der Regelgröße über dem Sollwert der Regelgröße liegt.

Statt der Änderungsgeschwindigkeit v der Temperaturgröße kann auch die zeitliche Ableitung e' der Regelabweichung e für die Korrektur verwendet werden. Aus dem Zusammenhang zwischen Istwert und Regelabweichung e folgt unmittelbar, daß die zeitliche Ableitung e' betragsmäßig mit der Änderungsgeschwindigkeit v übereinstimmt, daß aber deren Vorzeichen unterschiedlich sind.

Vorteilhaft kann es sein, wenn die Korrektur des Stellsignals y für das Mischventil 4 nur dann erfolgt, wenn Regelabweichung e und Änderungsgeschwindigkeit v von Kesseltemperatur T_{K} und/oder Heizungsvorlauftemperatur T_{V} ungleiches Vorzeichen haben, oder anders ausgedrückt, wenn Regelabweichung e und zeitliche Ableitung e' gleiches Vorzeichen haben. Damit können unerwüschte Seiteneffekte vermieden werden.

In der Fig. 2 ist jener Teil des inneren Aufbaus des Heizungsreglers 11 dargestellt, der im Zusammenhang mit der Erfindung relevant ist. Mit 14 ist ein Sollwertgeber bezeichnet, der den Sollwert für die Heizungsvorlauftemperatur T_{V} beispielsweise je nach Außen- und/oder Raumtemperatur bildet. Dieser Sollwert gelangt auf einen nicht invertierenden Eingang eines Differenzverstärkers 15, an dessen invertierendem Eingang das Signal des Vorlauftemperaturfühlers 10 anliegt. Der Ausgang des Differenzverstärkers 15 ist mit einem Impulsformer 16 verbunden. Dieser Impulsformer 16, dessen Ausgang mit dem Antrieb 12 des Mischventils 4 verbunden ist, wandelt die Regelabweichung in bekannter Weise in ein Stellsignal für ein Mischventil 4 um. Im Heizungsregler 11 ist außerdem ein Differenzierglied 17 vorhanden, dessen Eingang mit dem im Wärmeträgerkreislauf angeordneten Vorlauftemperaturfühler 10 verbunden ist und das somit die Änderungsgeschwindigkeit v der Heizungsvorlauftemperatur T_{V} bildet. Der Ausgang des Differenzierglieds 17 ist mit einem Eingang des Differenzverstärkers 15 verbunden, durch den dessen Verstärkungsfaktor bestimmbar ist.

Durch diese Anordnung wird ein Stellsignal y für das Mischventil 4 erzeugt, das einerseits von der die Regelabweichung e darstellenden Differenz zwischen Sollwert und Istwert der Heizungsvorlauftemperatur T_{V} und andererseits von der Änderungsgeschwindigkeit der Heizungsvorlauftemperatur T_{V} abhängig ist.

In der Fig. 3 ist eine Variante eines Heizungsreglers 11 gezeigt. Die Eingänge des Differenzverstärkers 15 sind wie beim vorhergehenden Ausführungsbeispiel beschaltet. Die vom Differenzverstärker 15 gebildete Regelabweichung e wird hier vier verschiedenen Elementen parallel zugeleitet: dem Differenzierglied 17, einem Verstärker 18, einem Absolutwertbildner 19 und einem ersten Eingang eines Multiplizier-Vergleichers 20, an dessen zweitem Eingang das Ausgangssignal des Differenzierglieds 17 liegt. Der Ausgang des Verstärkers 18 ist mit einem ersten Eingang eines Summierers 21 verbunden. Der Ausgang des Absolutwertbildners 19 ist mit einem ersten Eingang eines Multiplizierers 22 verbunden, an dessen zweitem Eingang das Ausgangssignal des Differenzierglieds 17 liegt. Der Multiplizierer 22 kann einen dritten Eingang besitzen, an dem ein bestimmter einstellbarer Pegel K anliegt, durch den der Verstärkungsfaktor des Multiplizierers 22 einstellbar ist. Ein Sollwertgeber für den Pegel K kann aber auch im Multiplizierer 22 selbst vorhanden sein. Der Ausgang des Multiplizierers 22 ist mit einem Eingang eines Analogschalters 23 verbunden. Der Schaltzustand des Analogschalters 23 wird bestimmt durch ein Signal an einem weiteren Eingang, der mit dem Ausgang des Multiplizier-Vergleichers 20 verbunden ist. Der Ausgang des Analogschalters 23 ist mit einem zweiten Eingang des Summierers 21 verbunden. Am Ausgang des Summierers 21 steht das dem Mischventil 4 zuzuführende Stellsignal y an.

Nachfolgend wird die Funktion dieser Schaltungsvariante beschrieben. Der Differenzverstärker 15 bildet in bekannter Weise die Regelabweichung e. Das Differenzierglied 17 ermittelt hier nicht wie beim vorigen Ausführungsbeispiel die Änderungsgeschwindigkeit der Heizungsvorlauftemperatur T_{V}, sondern die Änderungsgeschwindigkeit der Regelabweichung e, die als erste zeitliche Ableitung e' bezeichnet werden kann.

Die Regelabweichung e wird im Verstärker 18 verstärkt. Im Absolutwertbildner 19 wird der Absolutbetrag der Regelabweichung e ermittelt. Der Multiplizier-Vergleicher 20 multipliziert die Regelabweichung e mit der zeitlichen Ableitung e' und vergleicht das Produkt mit Null. Ist das Produkt größer Null, wird der nachfolgende Analogschalter 23 eingeschaltet, andernfalls ist dieser ausgeschaltet. Das Produkt von e und e' ist immer dann größer Null, wenn e und e' gleiche Vorzeichen haben.

Der Absolutbetrag der Regelabweichung e, bezeichnet mit |e|, wird im Multiplizierer 22 mit der zeitlichen Ableitung e' und einem konstanten Faktor multipliziert. Dieses Produkt ist die Korrekturgröße, die bei der Bildung der Stellgröße y zu berücksichtigen ist. Diese Korrekturgröße wird über den Analogschalter 23, dessen Zustand wie zuvor erwähnt vom Multiplizier-Vergleicher 20 bestimmt wird, an den zweiten Eingang des Summierers 21 geleitet. Der Summierer 21 liefert das Stellsignal y.

Die Stellgröße y enthält hier also eine Korrektur, deren Größe vom Produkt aus dem Absolutbetrag der Regelabweichung e, aus der zeitlichen Ableitung e' der Regelabweichung e und einem konstanten Faktor bestimmt wird, wobei die Korrektur aber nur dann erfolgt, wenn die Vorzeichen von Regelabweichung e und Ableitung e' übereinstimmen.

Bei diesem Ausführungsbeispiel wird statt der Änderungsgeschwindigkeit v für die Temperaturgröße im Wärmeträgerkreislauf die Änderungsgeschwindigkeit der Regelabweichung e für die Bildung des Stellsignals y berücksichtigt. Dies ist, wie zuvor schon beschrieben, zulässig, denn die zeitliche Änderung der Temperaturgröße ist in der zeitlichen Änderung der Regelabweichung e enthalten. Vorteilhaft ist aber, daß bei diesem Ausführungsbeispiel auch die Änderungsgeschwindigkeit des Sollwertes berücksichtigt wird. Die Änderungsgeschwindigkeit des Sollwertes ist in der Regel allerdings erheblich kleiner als die Änderungsgeschwindigkeit der Temperaturgröße im Heizungskreislauf. Dies gilt besonders für Bauten mit guter Wärmeisolation, weshalb die dafür geeigneten Heizungsregler beispielsweise bei der Sollwertermittlung eine fortlaufende Mittelung der Außentemperatur durchführen.

Nachfolgend wird ein weiteres Ausführungsbeispiel gemäß der Fig. 4 beschrieben. Der Vorlauftemperaturfühler 10 und der Sollwertgeber 14 sind an die beiden Eingänge des Differenzverstärkers 15 angeschlossen, dessen Ausgang über den Verstärker 18 zum ersten Eingang des Summierers 21 führt. Der Kesseltemperaturfühler 13 ist an einen Eingang eines Differenziergliedes 24 angeschlossen, dessen Ausgang mit einem Eingang eines Verstärkers 25 verbunden ist. Der Ausgang des Verstärkers 25 führt zum zweiten Eingang des Summierers 21.

Der Ausgang des Summierers 21 führt über den Analogschalter 23 zum Impulsformer 16. Der Schaltzustand des Analogschalters 23 wird durch wie beim vorhergehenden Ausführungsbeispiel durch den Multiplizier-Vergleicher 20 bestimmt, dessen einer Eingang mit dem Ausgang des Differenzverstärkers 15 verbunden ist und somit das Signal der Regelabweichung e führt, während der zweite Eingang mit dem Ausgang des Summierers 21 verbunden ist und somit ein Signal führt, das anteilig aus der Regelabweichung e und der zeitlichen Ableitung des Signals des Kesseltemperaturfühlers 13 besteht.

In bekannter Weise ermittelt der Differenzverstärker 15 die Regelabweichung e. Die Regelabweichung e wird vom Verstärker 18 verstärkt. Durch den einstellbaren Verstärkungsfaktor des Verstärkers 18 kann bestimmt werden, wie groß die Wirkung der Regelabweichung e auf die Bildung des Stellsignals y sein soll. Das Differenzierglied 24 ermittelt die zeitliche Ableitung des Signals des Kesseltemperaturfühlers 13. Durch den ebenfalls einstellbaren Verstärkungsfaktor des Verstärkers 25 kann in analoger Weise die Größe des Einflusses dieser zeitlichen Ableitung auf die Bildung des Stellsignals y bestimmt werden. Der Summierer 21 summiert diese beiden Signale und führt sie über den Anlalogschalter 23 dem Impulsformer 16 zu, der die Verstellung des Antriebs 12 des Mischventils 4 bewirkt.

Der Multiplizier-Vergleicher 20 ermittelt wie beim vorigen Ausführungsbeispiel die Vorzeichengleichheit zweier Signale. Bei diesen beiden Signalen handelt es sich hier um eines, das durch den Verstärker 18 aus der Regelabweichung e gebildet wird und immer das gleiche Vorzeichen hat wie die Regelabweichung e, und um ein zweites, das das anteilig aus der Regelabweichung e und der zeitlichen Ableitung des Signals des Kesseltemperaturfühlers 13 besteht.

Im Unterschied zum vorhergehenden Ausführungsbeispiel, bei dem durch den Multiplizier-Vergleicher 20 bei Ungleichheit der Signalvorzeichen nur die Korrektur unterdrückt wird, wird bei dem Ausführungsbeispiel gemäß Fig. 4 das gesamte Signal unterdrückt. Es wird also kein Stellsignal y erzeugt, wenn die Signalvorzeichen ungleich sind. Diese Lösung setzt voraus, daß der Antrieb 12 für das Mischventil 4 seine Stellung und damit die Stellung des Mischventils 4 beibehält, wenn kein Stellsignal y eintrifft. Der Antrieb 12 kann somit beispielsweise ein elektromotorischer Antrieb, darf aber kein elektrothermischer Antrieb sein.

Bei der Schaltung gemäß Fig. 4 kann anstelle der Ermittlung der zeitlichen Ableitung der Kesseltemperatur T_{K} auch die Heizungsvorlauftemperatur T_{V} abgeleitet werden. Dies gilt beispielsweise dann, wenn der Heizungsregler 11 als Zonenregler Verwendung finden soll, für den ein Kesseltemperatur-Istwert nicht zur Verfügung steht.

Es ist besonders vorteilhaft, wenn in dem ersten, der Verarbeitung der Regelabweichung e dienenden Schaltungszweig der Verstärker 18 angeordnet ist, mit dem die Größe des Einflusses der Regelabweichung e auf das Stellsignal y bestimmbar ist, und wenn in dem zweiten, der Verarbeitung der Änderungsgeschwindigkeit v dienenden Schaltungszweig ein weiterer Verstärker 25 angeordnet ist, mit dem die Größe des Einflusses der Änderungsgeschwindigkeit v bestimmbar ist. Beim Ausführungsbeispiel gemäß Fig. 3 hat der Multiplizierer 22 diese Funktion. Durch die separate Einstellbarkeit der Einflüsse von Regelabweichung e und Änderungsgeschwindigkeit v ist eine optimale Anpassung an die Gegebenheiten des Regelkreises, also der jeweiligen Heizungsanlagen-Bauart, möglich.

Ausgehend von den beschriebenen Varianten sind weitere Schaltungsvarianten möglich, ohne den Rahmen der Erfindung zu verlassen. Insbesondere sind auf dieser Basis verschiedene Varianten von digital arbeitenden Heizungsreglern 11 möglich. Bei solchen digitalen Heizungsreglern 11 können weitere Maßnahmen verwirklicht sein wie etwa eine Meßwertfilterung und eine Synchronisation. Eine solche Synchronisation kann beispielsweise zum Inhalt haben, daß jeweils kurz vor dem Zeitfenster für die Bildung eines neuen Stellsignals die jeweilige Änderungsgeschwindigkeit der Temperaturgröße neu berechnet wird.

Das erfindungsgemäße Verfahren und die Heizungsregler 11, die nach diesem Verfahren arbeiten, zeichnen sich dadurch aus, daß insgesamt die Anzahl der Stellbefehle an das Mischventil 4 verringert ist. Dies rührt daher, daß bei der Bildung von Stellsignalen y gleichsam vorausschauend die Änderungsgeschwindigkeit wenigstens einer Temperaturgröße im Heizungskreislauf berücksichtigt wird, so daß nachfolgend weniger neue Stellsignale y generiert werden müssen. Weil die meisten Heizungsregler 11 den Antrieb 12 des Mischventils 4 über Ausgangsrelais ansteuern, haben diese Ausgangsrelais weniger Schaltzyklen auszuführen. Da Relais wegen des mit dem Schalten verbundenen Verschleisses an den Kontakten nur eine begrenzte Zahl von Schaltzyklen bis zum Versagen ertragen, hat das erfindungsgemäße Verfahren den Vorteil, daß die Lebensdauer des Heizungsreglers 11 insgesamt erhöht wird.

## Patentansprüche

1. Verfahren zur Regelung der Vorlauftemperatur in einer einen Wärmeträgerkreislauf (1, 3, 5, 6, 7, 8, 9) beinhaltenden Heizungsanlage, bei dem der Istwert der mittels eines Vorlauftemperaturfühlers (10) gemessenen Heizungsvorlauftemperatur (T_{V}) mit dem Sollwert der Heizungsvorlauftemperatur (T_{V}) verglichen wird und die die Regelabweichung (e) darstellende Differenz zwischen Istwert und Sollwert der Heizungsvorlauftemperatur (T_{V}) in ein Stellsignal (y) für ein Mischventil (4) umgewandelt wird, dadurch gekennzeichnet, daß bei der Erzeugung des Stellsignals (y) für das Mischventil (4) die Änderungsgeschwindigkeit (v) mindestens einer Temperaturgröße im Wärmeträgerkreislauf (1, 3, 5, 6, 7, 8, 9) in der Form berücksichtigt wird, daß bei steigender Temperaturgröße eine Korrektur des Stellsignals (y) in Schließrichtung und bei fallender Temperatur eine Korrektur in Öffnungsrichtung erfolgt und daß die absolute Größe der Änderungsgeschwindigkeit (v) die absolute Größe der Korrektur bestimmt.

2. Verfahren nach Anspruch 1, dadurch gekennzeichnet, daß die Temperaturgröße die Heizungsvorlauftemperatur (T_{V}) ist.

3. Verfahren nach Anspruch 1 oder 2, dadurch gekennzeichnet, daß die Änderungsgeschwindigkeit (v) der Kesselvorlauftemperatur (T_{K}) bei der Erzeugung des Stellsignals für das Mischventil (4) berücksichtigt wird.

4. Verfahren nach Anspruch 3, dadurch gekennzeichnet, daß die absolute Größe der Korrektur des Stellsignals (y) für das Mischventil (4) proportional zur absoluten Größe der Änderungsgeschwindigkeit (v) der Heizungsvorlauftemperatur (T_{V}) und/oder der Kesselvorlauftemperatur (T_{K}) ist.

5. Verfahren nach Anspruch 4, dadurch gekennzeichnet, daß der Proportionalitätsfaktor der Relation zwischen Größe der Korrektur des Stellsignals (y) und Größe der Änderungsgeschwindigkeit (v) von Kesseltemperatur (T_{K}) und/oder Heizungsvorlauftemperatur (T_{V}) eine Funktion der Regelabweichung (e) ist.

6. Verfahren nach einem der Ansprüche 1 bis 5, dadurch gekennzeichnet, daß die Korrektur des Stellsignals (y) für das Mischventil (4) nur dann erfolgt, wenn Regelabweichung (e) und Änderungsgeschwindigkeit (v) von Kesseltemperatur (T_{K}) und/oder Heizungsvorlauftemperatur (T_{V}) ungleiches Vorzeichen haben.

7. Regelgerät (11) zur Regelung der Vorlauftemperatur einer einen Wärmeträgerkreislauf (1, 3, 5, 6, 7, 8, 9) beinhaltenden Heizungsanlage mit einem Differenzverstärker (15), der den mittels eines Vorlauftemperaturfühlers (10) gemessenen Istwert der Heizungsvorlauftemperatur (T_{V}) mit dem Sollwert der Heizungsvorlauftemperatur (T_{V}) vergleicht und die die Regelabweichung (e) darstellende Differenz zwischen Sollwert und Istwert der Heizungsvorlauftemperatur (T_{V}) bildet, und mit einem dem Differenzverstärker (15) nachgeschalteten Impulsformer (16), der die Regelabweichung in ein Stellsignal (y) für ein Mischventil (4) umwandelt, dadurch gekennzeichnet, daß es mindestens ein Differenzierglied (17, 24) aufweist, dessen Eingang von einem im Wärmeträgerkreislauf (1, 3, 5, 6, 7, 8, 9) angeordneten Temperaturfühler (10; 13) beeinflußbar ist und somit die Änderungsgeschwindigkeit (v) mindestens einer Temperaturgröße im Wärmeträgerkreislauf berücksichtigt, und daß dessen Ausgang mit mindestens einem weiteren Schaltungsglied (15; 20, 21, 22, 23; 21, 23, 25) verbunden ist, das der Bildung des Stellsignals für das Mischventil (4) dient.

8. Regelgerät nach Anspruch 7, dadurch gekennzeichnet, daß der Eingang des Differenzierglieds (17) mit dem Vorlauftemperaturfühler (10) und der Ausgang des Differenzierglieds (17) mit einem Eingang des Differenzverstärkers (15), durch den dessen Verstärkungsfaktor bestimmbar ist, verbunden sind.

9. Regelgerät nach Anspruch 7, dadurch gekennzeichnet, daß der Eingang des Differenzierglieds (24) mit einem im Wärmeträgerkreislauf (1, 3, 5, 6, 7, 8, 9) angeordneten Temperaturfülher (10; 13) und der Ausgang des Differenzierglieds (24) mit weiteren Schaltungsgliedern (25, 21, 23) zur Korrektur des Stellsignals (y) verbunden sind.

10. Regelgerät nach Anspruch 7, dadurch gekennzeichnet, daß der Eingang des Differenzierglieds (17) mit dem Ausgang des Differenzverstärkers (15) und der Ausgang des Differenzierglieds (17) mit weiteren Schaltungsgliedern (22, 23, 21) zur Korrektur des Stellsignals (y) verbunden sind.

11. Regelgerät nach Anspruch 9 oder 10, dadurch gekennzeichnet, daß ein Multiplizier-Vergleicher (20) vorhanden ist, dessen einer Eingang mit dem Ausgang des Differenzverstärkers (15) verbunden ist und an dessen zweitem Eingang ein Signal anliegt, das das Ausgangssignal des Differenzierglieds (17; 24) berücksichtigt, und daß der Multiplizier-Vergleicher (20) mit einem dessen Schaltzustand bestimmenden Analogschalter (23) verbunden ist, der mindestens die Korrektur des Stellsignals (y) dann unterdrückt, wenn die Regelabweichung (e) und die Änderungsgeschwindigkeit (v) gleiches Vorzeichen haben.

12. Regelgerät nach Anspruch 9 oder 10, dadurch gekennzeichnet, daß in einem ersten, der Verarbeitung der Regelabweichung (e) dienenden Schaltungszweig ein Verstärker (18) angeordnet ist, mit dem die Größe des Einflusses der Regelabweichung (e) auf das Stellsignal (y) bestimmbar ist, und daß in einem zweiten, der Verarbeitung der Änderungsgeschwindigkeit (v) dienenden Schaltungszweig ein weiterer Verstärker (22; 25) angeordnet ist, mit dem die Größe des Einflusses der Änderungsgeschwindigkeit (v) bestimmbar ist.

## Claims

1. A method of regulating the flow temperature in a heating installation including a heat carrier circuit (1, 3, 5, 6, 7, 8, 9), in which the actual value of the heating flow temperature (T_{V}) measured by means of a flow temperature sensor (10) is compared to the reference value of the heating flow temperature (T_{V}) and the difference between the actual value and the reference value of the heating flow temperature (T_{V}), which difference represents the regulating deviation (e), is converted into a setting signal (y) for a mixer valve (4), characterised in that the rate of change (v) of at least one temperature parameter in the heat carrier circuit (1, 3, 5, 6, 7, 8, 9) is taken into consideration in production of the setting signal (y) for the mixer valve (4) in such a way that with a rising temperature parameter a correction of the setting signal (y) is effected in the closing direction and with a falling temperature a correction is effected in the opening direction and that the absolute value of the rate of change (v) determines the absolute value of the correction.

2. A method according to claim 1 characterised in that the temperature parameter is the heating flow temperature (T_{V}).

3. A method according to claim 1 or claim 2 characterised in that the rate of change (v) of the boiler flow temperature (T_{K}) is taken into consideration in generating the setting signal for the mixer valve (4).

4. A method according to claim 3 characterised in that the absolute value of the correction of the setting signal (y) for the mixer valve (4) is proportional to the absolute value of the rate of change (v) of the heating flow temperature (T_{V}) and/or the boiler flow temperature (T_{K}).

5. A method according to claim 4 characterised in that the proportionality factor of the relationship between the value of the correction of the setting signal (y) and the value of the rate of change (v) of the boiler temperature (T_{K}) and/or heating flow temperature (T_{V}) is a function of the regulating deviation (e).

6. A method according to one of claims 1 to 5 characterised in that correction of the setting signal (y) for the mixer valve (4) is effected only when the regulating deviation (e) and the rate of change (v) of the boiler temperature (T_{K}) and/or the heating flow temperature (T_{V}) are different in sign.

7. A regulating apparatus (11) for regulating the flow temperature of a heating installation including a heat carrier circuit (1, 3, 5, 6, 7, 8, 9) comprising a differential amplifier (15) which compares the actual value of the heating flow temperature (T_{V}) measured by means of a flow temperature sensor (10) to the reference value of the heating flow temperature (T_{V}) and forms the difference between the reference value and the actual value of the heating flow temperature (T_{V}), which difference represents the regulating deviation (e), and a pulse shaper (16) which is connected downstream of the differential amplifier (15) and which converts the regulating deviation into a setting signal (y) for a mixer valve (4), characterised in that it has at least one differentiating member (17, 24) whose input can be influenced by a temperature sensor (10; 13) disposed in the heat carrier circuit (1, 3, 5, 6, 7, 8, 9) and thus takes account of the rate of change (v) of at least one temperature parameter in the heat carrier circuit, and that the output thereof is connected to at least one further circuit member (15; 20, 21, 22, 23; 21, 23, 25) which serves to form the setting signal for the mixer valve (4).

8. A regulating apparatus according to claim 7 characterised in that the input of the differentiating member (17) is connected to the flow temperature sensor (10) and the output of the differentiating member (17) is connected to an input of the differential amplifier (15) by which its gain factor can be determined.

9. A regulating apparatus according to claim 7 characterised in that the input of the differentiating member (24) is connected to a temperature sensor (10; 13) arranged in the heat carrier circuit (1, 3, 5, 6, 7, 8, 9) and the output of the differentiating member (24) is connected to further circuit members (25, 21, 23) for correction of the setting signal (y).

10. A regulating apparatus according to claim 7 characterised in that the input of the differentiating member (17) is connected to the output of the differential amplifier (15) and the output of the differentiating memebr (17) is connected to further circuit members (22, 23, 21) for correction of the setting signal (y).

11. A regulating apparatus according to claim 9 or claim 10 characterised in that there is a multiplier comparator (20) of which one input is connected to the output of the differential amplifier (15) and to the second input of which is applied a signal which takes account of the output signal of the differentiating member (17; 24), and that the multiplier comparator (20) is connected to an analog switch (23) which determines the switching state thereof and which at least suppresses correction of the setting signal (y) when the regulating deviation (e) and the rate of change (v) are the same sign.

12. A regulating apparatus according to claim 9 or claim 10 characterised in that disposed in a first circuit branch which serves for processing of the regulating deviation (e) is an amplifier (18) for determining the magnitude of the influence of the regulating deviation (e) on the setting signal (y) and arranged in a second circuit branch serving for processing of the rate of change (v) is a further amplifier (22; 25) for determining the magnitude of the influence of the rate of change (v).

## Revendications

1. Procédé pour régler la température aller dans une installation de chauffage contenant un circuit (1,3,5,6,7,8,9) d'un liquide caloporteur, selon lequel la valeur réelle d'une température aller (T_{V}) de l'installation de chauffage mesurée au moyen d'un capteur (10) de la température aller, est comparée à la valeur de consigne de la température aller (T_{V}) de l'installation de chauffage, et la différence, qui représente l'écart de régulation (e), entre la valeur réelle et la valeur de consigne de la température aller (T_{V}) de l'installation de chauffage est convertie en un signal de réglage (y) pour une soupape de mélange (4), caractérisé en ce que, lors de la production du signal de réglage (y) pour la soupape de mélange (4), la vitesse de variation (v) au moins d'une valeur de température dans le circuit (1,3,5,6,7,8,9) du liquide caloporteur est prise en compte par le fait que, lorsque la température augmente, une correction du signal de réglage (y) est exécutée dans le sens de la fermeture et que dans le cas où la température diminue, une correction est exécutée dans le sens de l'ouverture, et que la valeur absolue de la vitesse de variation (v) détermine la valeur absolue de la correction.

2. Procédé selon la revendication 1, caractérisé ence que la température est la température aller (T_{V}) de l'installation de chauffage.

3. Procédé selon la revendication 1 ou 2, caractérisé en ce que la vitesse de variation (v) de la température aller (T_{K}) de la chaudière est prise en compte lors de la production du signal de réglage pour la soupape de mélange (4).

4. Procédé selon la revendication 3, caractérisé en ce que la valeur absolue de la correction du signal de réglage (y) pour la soupape de mélange (4) est proportionnelle à la valeur absolue de la vitesse de variation (v) de la température aller (T_{V}) de l'installation de chauffage et/ou de la température aller (T_{K}) de la chaudière.

5. Procédé selon la revendication 4, caractérisé en ce que le facteur de proportionnalité de la relation entre la grandeur de la correction du signal de réglage (y) et la grandeur de la vitesse de variation (v) de la température (T_{K}) de la chaudière et/ou de la température aller (T_{V}) de l'installation de chauffage est fonction de l'écart de régulation (e).

6. Procédé selon l'une des revendications 1 à 5, caractérisé en ce que la correction du signal de réglage (y) pour la soupape de mélange (4) est exécutée uniquement lorsque l'écart de régulation (e) et la vitesse de variation (v) de la température (T_{K}) de la chaudière et/ou de la température aller (T_{V}) de l'installation de chauffage ont des signes différents.

7. Dispositif de régulation (11) servant à régler la température aller d'une installation de chauffage contenant un circuit (1,3,5,6,7,8,9) d'un liquide caloporteur et comportant un amplificateur différentiel (15), qui compare la valeur réelle de la température aller (T_{V}) de l'installation de chauffage, mesurée au moyen d'un capteur (10) de la température aller, à la valeur de consigne de la température aller (T_{V}) de l'installation de chauffage et qui forme la différence, qui représente l'écart de régulation (e), entre la valeur de consigne et la valeur réelle de la température aller (T_{V}) de l'installation de chauffage, et comportant un dispositif de mise en forme d'impulsions (16) branché en aval de l'amplificateur différentiel (15) et qui convertit l'écart de régulation en un signal de réglage (y) pour une soupape de mélange (4), caractérisé en ce qu'il comporte au moins un circuit différentiateur (17,24), dont l'entrée peut être influencée par un capteur de température (10;13) disposé dans le circuit (1,3,5,6,7,8,9) du liquide caloporteur et rencontre par conséquent la vitesse de variation (v) au moins d'une valeur de température dans le circuit du fluide caloporteur, et que sa sortie est reliée à au moins un autre élément de circuit (15;20,21,22,23; 21,23,25), qui sert à former le signal de réglage pour la soupape de mélange (4).

8. Dispositif de régulation selon la revendication 7, caractérisé en ce que l'entrée du circuit différentiateur (17) est reliée au capteur (10) de la température aller et que la sortie du circuit différentiateur (17) est reliée à une entrée de l'amplificateur différentiel (15), au moyen de laquelle le facteur d'amplification de cet amplificateur peut être déterminé.

9. Dispositif de régulation selon la revendication 7, caractérisé en ce que l'entrée du circuit différentiateur (24) est reliée à un capteur de température (10;15), qui est disposé dans le circuit (1,3,5,6,7,8,9) du liquide caloporteur, et que la sortie du circuit différentiateur (24) est reliée à d'autres éléments de circuit (25,21,23) pour la correction du signal de réglage (y).

10. Dispositif de régulation selon la revendication 7, caractérisé en ce que l'entrée du circuit différentiateur (17) est reliée à la sortie de l'amplificateur différentiel (15) et que la sortie du circuit différentiateur (17) est reliée à d'autres éléments de circuit (22,23,21) pour la correction du signal de réglage (y).

11. Dispositif de régulation selon la revendication 9 ou 10, caractérisé en ce qu'il est prévu un multiplicateur-comparateur (20), dont une entrée est reliée à la sortie de l'amplificateur différentiel (15) et à la seconde entrée duquel est appliqué un signal qui prend en compte le signal de sortie de l'amplificateur différentiel (17;24), et que le multiplicateur-comparateur (20) est relié à un commutateur analogique (23) qui détermine l'état de commutation du multiplicateur-comparateur et qui réduit au moins la correction du signal de réglage (y) lorsque l'écart de régulation (e) et la vitesse de variation (v) possèdent le même signe.

12. Dispositif de régulation selon la revendication 9 ou 10, caractérisé en ce que dans une première branche du circuit, qui est utilisée pour le traitement de l'écart de régulation (e), est disposé un amplificateur (18), au moyen duquel la grandeur de l'influence de l'écart de régulation (e) sur le signal de réglage (y) peut être déterminée, et que dans une seconde branche du circuit, qui sert au traitement de la vitesse de variation (v), est disposé un autre amplificateur (22;25), au moyen duquel peut être déterminée la valeur de l'influence de la vitesse de variation (v).
